(19) Europäisches Patentamt
European Patent Office
Office européen des brevets

(11) **EP 1 691 173 B1**

(12) **EUROPEAN PATENT SPECIFICATION**

(45) Date of publication and mention
of the grant of the patent:
**06.04.2016 Bulletin 2016/14**

(51) Int Cl.:
*G01D 5/48* (2006.01)     *G01B 7/00* (2006.01)

(21) Application number: **05425018.8**

(22) Date of filing: **18.01.2005**

(54) **Magnetostrictive position sensor**

Magnetostriktiver Positionssensor

Capteur de position à magnétostriction

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**16.08.2006 Bulletin 2006/33**

(73) Proprietor: **Gefran S.p.A.**
**25050 Provaglio d'Iseo (Brescia) (IT)**

(72) Inventors:
• **Ferrari, Paolo**
**25126 Brescia (IT)**
• **Marioli, Daniele**
**25100 Brescia (IT)**
• **Flammini, Alessandra**
**25133 Brescia (IT)**
• **Taroni, Andrea**
**40100 Bologna (IT)**

(74) Representative: **Mozzi, Matteo et al**
**Jacobacci & Partners S.p.A.**
**Via Senato, 8**
**20121 Milano (IT)**

(56) References cited:
**US-A- 5 017 867     US-A- 5 196 791
US-A- 5 583 433**

• **PATENT ABSTRACTS OF JAPAN vol. 2000, no. 23, 10 February 2001 (2001-02-10) & JP 2001 153639 A (MAKOME KENKYUSHO:KK), 8 June 2001 (2001-06-08)**

## Description

Field of application

The present invention relates to a position measuring device with magnetostrictive technology for detecting a position variation of a magnetic cursor. The invention also relates to a corresponding measuring method.

More in particular, the invention relates to a device and a method for detecting a position or a length measure by using the magnetostriction principles based on the magneto-mecchanical properties of ferromagnetic materials subjected to suitable magnetic fields and founded on the known Wiedemann effect.

Even more in particular, the invention relates to a device of the aforesaid type and comprising:

a magnetostrictive wave guide;

at least one magnetic cursor sliding along said wave guide;

a pulse generator associated with the wave guide, for providing said magnetostrictive sensor with current pulses and producing a magnetostrictive effect in correspondence with said magnetic cursor;

a magnetoacoustic wave detector placed at one end of said wave guide for detecting echoes of said pulses and outputting a corresponding detection electrical signal.

Prior art

As it is well known to the skilled in the art, measuring devices with magnetostrictive sensor exploit a detection mode of the magnetic type.

Measuring devices of this type particularly, but not exclusively, comprise a wave guide of ferromagnetic material, of substantially tubular shape and a conductor wire being extended centrally and coaxially to the wave guide. Normally, the wave guide is tied to at least one of the ends and it has a cursor being movably guided on the external surface of the wave guide and provided with a permanent magnet.

The wave guide, or possibly a casing thereof, is fixed to a structural reference, whereas the external cursor is integral with any element whose position and/or relative shift with respect to the structural reference is to be precisely established. For example, a typical field of application of these magnetostrictive sensors is the use in actuators and oil-pressure cylinders wherein it is necessary to precisely determine the mobile piston shifts.

The cursor can thus slide along the guide and generate a magnetic field which interacts with the one induced around the current wave guide which goes through the conductor wire. The interaction between the two magnetic fields determines in the wave guide a torsional elastic deformation through magnetostrictive effect.

An electronic circuit comprising a pulse generator is associated to one end of the wave guide. When a current pulse, also called excitation pulse, is applied to the conductor wire, a magnetoacoustic wave is generated inside the wave guide in correspondence with the position occupied by the permanent magnet external cursor.

The magnetoacoustic wave propagates in both the guide directions; at one end the wave is detected by a detection system or transducer and it is transformed into an electrical signal; the wave can be dampened by suitable dampening means, arranged at the ends.

As it is well known, the magnetoacoustic wave, generated by the magnetostrictive effect, has at least two pulses or echoes which transit in the guide in opposite directions and which through effect of reflections generate secondary pulses or echoes which transit in the wave guide itself according to certain time intervals and reach the end of the wave guide where the detector is placed.

The time delay between a current pulse generated by the pulse generator, and applied to the coaxial conductor wire to the wave guide, and the detection of a first pulse or main echo of the magnetostrictive wave, detected by the transducer, allows to calculate the position of the cursor and/or the position of the element integral therewith.

However, the presence of the secondary echoes or pulses of the magnetoacoustic wave is a source of noise and/or disturb which normally interferes with the main echo altering the signal perceived by the transducer and contributing to detecting from time to time wrong positions of the cursor.

For making the noise or disturb effects generated by the secondary echoes or pulses negligible or for erasing them, in the known technique dampening elements or suitable typically mechanical components are normally used, integral with one or both the ends of the wave guide.

Obviously, both the dampening elements, and the possible mechanical or electronic components used, must have a high reliability and they must ensure such an efficient dampening effect as to eliminate the noises or spurious signals generated by the secondary echoes, for making the measure precise as required by these types of devices.

These dampening elements and such mechanical or electronic components are particularly expensive and moreover, the assembly thereof, requires a specialised and particularly expert labour.

It is also known how the propagation speed of the magnetoacoustic wave in the wave guide strongly depends on the temperature. Thus, also a variation of the temperature can compromise the accuracy of the detection carried out by the measuring device.

The thermal drift due to the use of the sensor in a habitat subjected to wide ranges of temperature implies not a few problems for the measure precision and reliability.

The technical problem underlying the present invention is that of devising a measuring device with magnetostritcive sensor, for detecting positions or linear movements, and having such structural and functional characteristics as to discard dampening elements and/or typically mechanical tricks for eliminating secondary echoes, as well as able to carry out accurate detection without depending on temperature variations, thus overcoming the limits of the solutions currently proposed by the known technique.

Another aim of the invention is that of devising a simple and reliable detection method which allows to obtain accurate and repeatable measures overcoming at the same time the limits of the devices and methods realised according to the prior art.

US 5,017,867 discloses a magnetostrictive linear displacement detector with increased position resolution.

US 5, 583, 433 discloses a length measuring apparatus using an ultrasonic magnetostrictive delay line for detecting a position with high accuracy by utilizing phase matching or fan ultrasonic wave generated by an ultrasonic transmitter at one end of the magnetostrictive delay line.

Summary of the invention

The solution idea underlying the present invention is that of realising a position measuring device with the magnetostrictive technology comprising a pulse generator which, by means of a peculiar excitation method, is subject to generating in the wave guide, thanks to the magnetostrictive effect, such a magnetoacoustic wave that the secondary echoes pulses relative to a given excitation pulse are in constructive interference with at least the main echo relative to an immediately successive excitation pulse.

Advantageously, according to said solution idea, the pulse generator is driven for generating pulses with period equal to at least a multiple on basis 2 of a time $t_L$ defined as the time used by a magnetoacoustic wave to go through the whole length L of the sensor wave guide.

On the basis of such solution idea the technical problem is solved by device as previously indicated and defined by claim 1.

The invention also relates to a method defined by claim 9 and the following.

Brief description of the drawings

     figure 1 shows a schematic view in longitudinal section of a portion of a magnetostrictive sensor with a schematic representation of the path and the times of the main echoes or pulses and of the secondary echoes generated by reflection according to the present invention;

     figure 2 shows a time diagram of the distances between the main echoes or pulses and the secondary echoes which are induced by a first and a second excitation pulses generated according to the present invention;

     figure 3 shows a time diagram of the pulses effectively used for the detection of the cursor position;

     figure 4 shows a diagram of the echoes used during an initialisation or control step;

     figure 5 shows a block scheme of a measuring device with digital structure, realised according to the present invention;

     figure 6 shows a series of diagrams with equal time basis of signals generated inside the measuring device of figure 5 and by a processing unit realised according to the present invention;

     figure 7 shows a block scheme of a measuring device with analogue structure, realised according to the present invention;

     figure 8 shows a series of diagrams with equal time basis of signals generated inside the measuring device of figure 7 and by a processing unit realised according to the present invention.

Detailed description

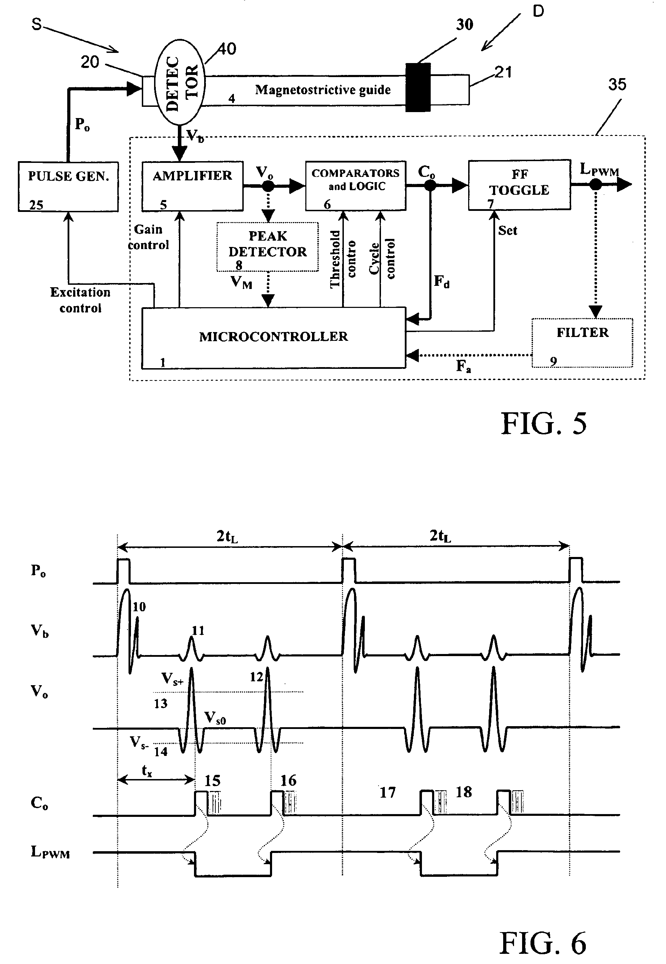

With reference to such figures, and in particular to the example of figure 5, D globally and schematically indicates a position measuring device with magnetostrictive technology comprising a magnetostrictive sensor S realised according to the present invention.

In particular the measuring device D comprises;

     a magnetostrictive wave uide 4;

     at least one magnetic cursor 30 sliding along said wave guide 4 and placed in particular in a generic position X with respect to one end 20 of the wave guide 4, identified as position zero;

     a pulse generator 25 associated with the wave guide 4, for providing said magnetostrictive sensor S with current pulses Po and producing a magnetostrictive effect in correspondence with said magnetic cursor 30;

     a magnetoacoustic wave detector 40 placed at one end 20 of said wave guide 4 for detecting echoes of said pulses Po and outputting a corresponding detection electric signal, for example a voltage signal Vb.

Advantageously, differently from known devices, the measuring device D does not comprise dampening elements.

Advantageously, according to the present invention, the measuring device D comprises a processing unit 35 being input said electric signal Vb and subject to outputting a Pulse Width Modulation ($L_{PWM}$) signal.

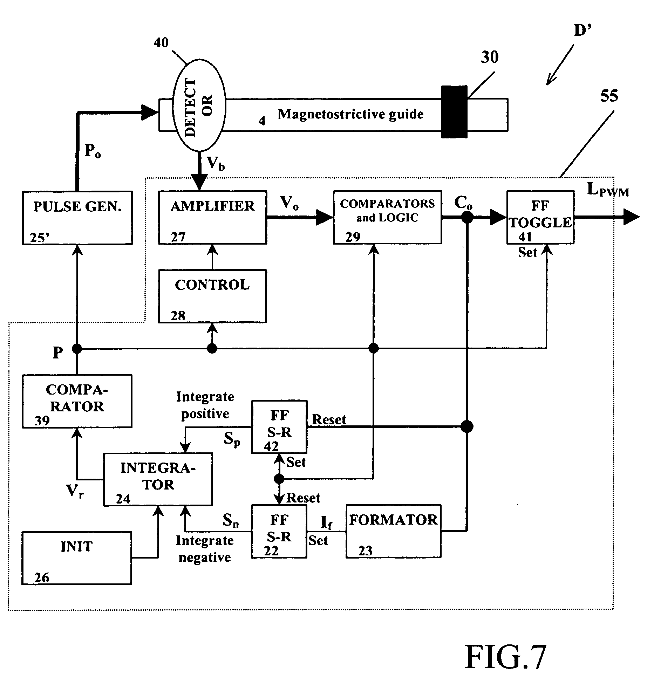

Said processing unit can be realised both with a digital structure 35, as shown simply by way of example in figure 5, and as analogue structure 55, as shown simply by way of example in figure 7.

For better understanding all the aspects of the present invention reference will be now immediately made to the measuring method of the invention and the processing unit structure, both of the digital type 35 and of the analogue type 55, will be hereafter analysed in greater detail.

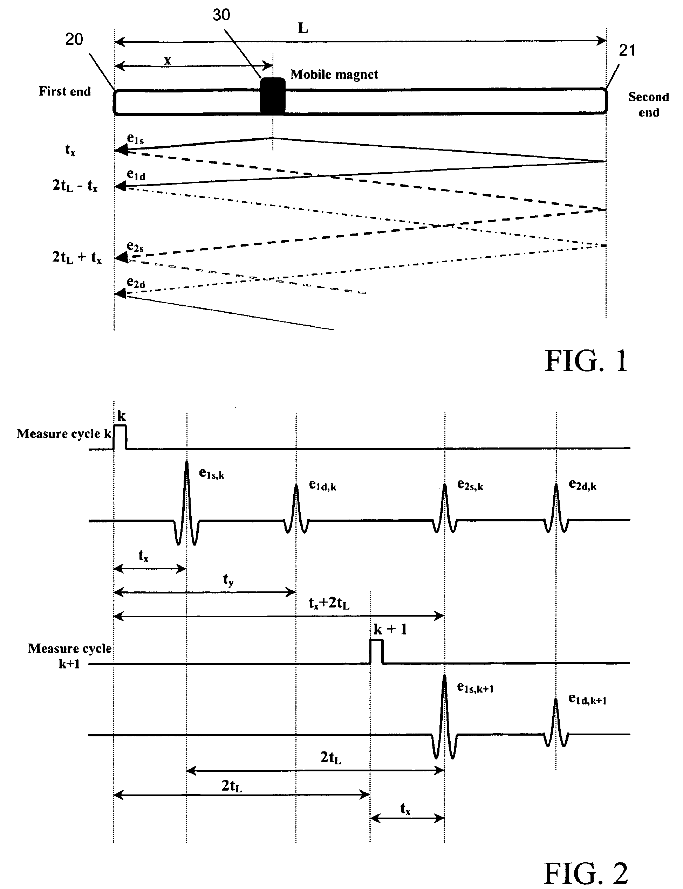

With particular reference to the notes of figure 1, the measuring method of the present invention supplies the wave guides 4 with an excitation signal Po having a period, i.e. a time distance between a first excitation pulse k and a successive pulse k+1, equal to at least a multiple on basis 2 of $t_L$, where $t_L$ is defined as the time used by a magnetoacoustic wave to go through the whole length L of the wave guide 4 of the sensor S.

In this way, by tidying the ends of the guide 4 so as to ensure a positive reflection coefficient, it is possible to realise constructive interferences between the echoes generated in the wave guides 4 by each excitation pulse Po.

In particular, as it is well shown in figure 2, wherein an hypothesis of a measure cycle with a first pulse k and a successive pulse k+1 is shown, and supposing the detection coil 40 perfectly placed at the end 20 of the wave guide, it is possible to appreciate the concept of constructive interference between the echoes generated by the excitation pulses Po, in the case in point with a period equal to $2t_L$.

Further to a first pulse k, a first main echo $e_{1s,k}$ and a first secondary echo $e_{1d,k}$ reach the detector 40 respectively after a delay $t_x$ and $t_Y$ and such that $t_x+t_y=2t_L$.

Therefore, hereafter $t_x$ will define the time delay with which the main echo $e_{1s,k}$ reaches the detector 40, and equal to the propagation speed of the magnetoacoustic wave multiplied by the position x of the magnetic cursor 30.

Advantageously, according to the present invention the successive excitation pulse (k+1) is supplied at a time distance equal to $2t_L$ from the first pulse k. This successive excitation pulse (k+1) generates in the wave guide 4 a first main echo $e_{1s,k+1}$ which reaches in turn the detector 40 with a delay equal to $t_x$ with respect to the excitation pulse (k+1).

Making reference instead to the first pulse k, the main echo $e_{1s,k+1}$ of the successive pulse k+1 reaches the detector 40 with a delay equal to $2t_L+t_x$ which is also advantageously the delay with which a second secondary echo $e_{2s,k}$ of the first pulse k reaches the detector 40.

A third secondary echo $e_{2d,k}$ of the first pulse k reaches the detector in phase with the first secondary echo $e_{1d,k+1}$ of the successive pulse k+1.

Thus, generalising, the main echo $e_{1s,k+1}$ generated by the last excitation pulse supplied k+1 is in constructive interference with all the secondary echoes of the s type ($e_{2s,k+1}$, $e_{3s,k+1}$, etc...), generated by the previous excitation pulses. Similarly, the echo $e_{1d,k+1}$ generated by the last excitation pulse supplied k+1 is in constructive interference with all the secondary echoes of the d type ($e_{2d,k+1}$, $e_{3d,k+1}$, etc.), generated by the previous excitation pulses.

In substance, the pulse generator is driven for generating pulses with period equal to at least a multiple on basis 2 of $t_L$, where $t_L$ is the time used by the magnetoacoustic wave to go through said length L of the wave guide 4, so that the secondary echoes of a given pulse (k) are advantageously in constructive interference with the main echo of an immediately successive pulse (k+1), improving the signal noise relation.

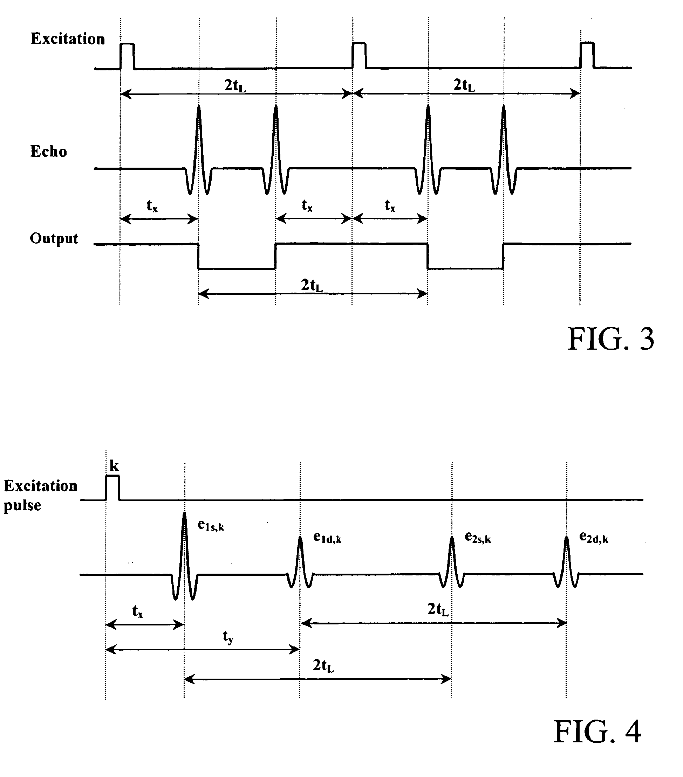

Such constructive interference is maximised by spacing the pulses of a period equal to $2t_L$, as shown in figure 2 and in figure 3.

Moreover advantageously, in each period $2t_L$ wherein an excitation pulse is generated, the detector 40 can receive, through effect of the magnetoacoustic wave and for the previously highlighted dimensions, only two echo detections as highlighted in figure 3.

Going back now to the digital structure of figure 5, the measuring device D according to the invention provides that the magnetoacoustic wave detector 40 is placed near one end 20 of the wave guide 4.

Advantageously, as already previously seen, the pulse generator 25 generates pulses Po with period equal to $2t_L$, where $t_L$ is the time used by a magnetoacoustic wave to go through the length L of the wave guide 4.

The value $t_L$ is directly calculated by the processing unit 35 during a suitable initialisation step and, advantageously, it is not necessary to know *a priori* the length L of the wave guide 4.

The processing unit 35, with digital structure, is input the outgoing signal Vb of the detector 40 and it comprises a microcontroller 1, which allows to command and control the other components of the same processing unit 35 during all the various operative steps.

The processing unit 35 is output connected to the pulse generator 25 which is driven thereby for generating the excitation pulses Po to be applied to a wave guide 4. The generator 25 can be for example a signal amplifier or an electric adapter which simply transforms an output CMOS of the microcontroller 1 into a power signal.

More simply, the generator 25 can be a converter V/I.

For a better comprehension, figure 6 reports diagrams with equal time basis of the main signals generated by the device D of figure 5 according to the present invention.

Each excitation pulse Po is suitably amplified by means of the generator 25 interposed between the microcontroller 1 and the end 20 of the magnetostrictive wave guide 4. The excitation pulse Po is thus a current pulse which applied to an inner wire of the wave guide 4, not highlighted in the figure since conventional, allows to excite the wave guide 4 itself.

As previously seen, the pulse Po in current generates in correspondence with the magnetic cursor 30 two magnetoacoustic waves which develop in opposite direction in the wave guide 4 though magnetostrictive effect; the corresponding echoes are detected by means of a sensing coil which generates an induced voltage Vb.

The detected corresponding induced voltage Vb has, through effect of the excitation pulses, a plurality of main pulses and/or echoes 11 generated by the magnetostrictive effect and some peaks or spurious echoes 10 mainly due to the excitation pulses Po introduced in the wave guide 4.

The induced voltage Vb is thus processed by the processing unit 35 which comprises in cascade an amplifier block 5, at least two comparators, a logic 6 and a flip-flop 7, which are all commanded and controlled by a microcontroller 1.

In particular the amplifier block 5 is input the induced voltage Vb of the detector 40, eliminating the peaks or spurious echoes 10 near the excitation pulses. The two pulses 11 are amplified according to a variable gain factor defined by the microcontroller 1.

More in particular, during the excitation step, when the maximum constructive interference has not been established yet, between the main and reflected echoes, such gain must be higher.

The amplifier block 5 thus outputs a signal Vo comprising a plurality of peaks 12 which correspond to the amplified pulses 11, as shown in figure 6.

The comparison block 6 is thus input the signal Vo and it verifies the sequence overcoming of some voltage thresholds by the peaks 12. In particular, in case of a minimal realisation, the voltage thresholds are at least two: Vs+ (13) positive voltage reference and Vso of the passage by zero.

The comparison block 6, when each peak 12 overcomes in sequence the thresholds Vs+ and Vso, outputs an impulsive signal $C_o$.

Figure 6 indicates with 15, 16, 17 and 18 the four pulses $c_o$ corresponding to the pulses 12 in a pair of periods $2t_L$.

Suitably, for increasing the immunity to the noise it is possible to provide also a further voltage threshold Vs- 14.

In such case, the comparison block 6 generates the impulsive signal $C_o$, indicative of the rise edge, if the sequence going through the threshold voltage $V_{S-}$, $V_{s+}$, $V_{so}$ is verified.

Naturally, the value of the voltage thresholds $V_{S-}$, $V_{s+}$, $V_{so}$ are regulated by the microcontroller 1 which, besides, manages the generation logic of the signal $C_o$.

In cascade to the comparison block 6 there is the flip-flop 7 which is input the impulsive signal Co and outputs the Pulse Width Modulation $L_{PWM}$ signal which is the output signal of the processing unit 35.

Also the signal $L_{PWM}$ has a period equal to $2t_L$ and a duty cycle equal to $t_x/t_L$ where $t_x$ is the delay between the excitation pulse and the detection of the first main echo or pulse.

Advantageously, the output signal $L_{PWM}$ maintains the duty-cycle independent from thermal variations which modify the propagation speed $v_p$ of the magnetoacoustic wave; in fact $t_x = x\, v_p$ and $t_L = L\, v_p$ for which the duty-cycle of the signal $L_{PWM}$ equal to $t_x/t_L = x/L$ directly codes the position of the mobile magnet 30.

The time $t_L$ is calculated by means of suitable measures executed by the microcontroller 1 in an initialisation step and in the measuring step.

The uniformity in the periods $2t_L$ allows the measuring device D to perform accurate and precise measures, other several advantages deriving from such trick will be more apparent from the following description.

The microcontroller 1, of the measuring device D, controls the comparison block 6 and the flip-flop 7 by means of two control signals for the initialisation and the management of the measuring step.

The microcontroller 1 also provides at least a feedback path which allows to carry out a control on the correctness of the measuring cycle.

A first feedback path is obtained by means of a control on a signal Fd copy of the impulsive signal Co.

The microcontroller 1 in such case measures the distance between the excitation pulse, known thereto, and the pulses in the signal Fd and thus it detects possible variations of the time $t_L$.

The device D can also comprise a peak detector block 8 which is input the signal Vo and detects the value of a peak $V_M$ of the signals 12 passing them as values to be analysed to the microcontroller 1. A variation in the peak value defines for the microcontroller 1 a piece of information for the automatic adjustment of the amplifier block 5 gain value.

The device D can comprise also a filter block 9 placed downstream the output and feedback connected to an input of the microcontroller for filtering the signal $L_{PWM}$ outputting a signal Fa equal to the duty value cycle of the signal $L_{PWM}$.

Advantageously, the signal Fa can be used as analogue output signal alternative or complementary to the output signal $L_{PWM}$.

Let's now analyse the operation of the measuring device D with digital structure in the light of the previous considerations inhering the measuring method of the present invention.

The magnetostrictive wave guide 4 has a predetermined length L, which does not need to be known *a priori*, and whereon the mobile magnetic cursor 30, which is placed in a generic position x with respect to an end 20 of the wave guide 4 identified as position 0, slides.

In such way the value of the position x, or effective stroke of the mobile magnet 30, is a value comprised between q and (L-q), i.e. q<x<(L-q), where q is a distance in the order of a centimetre.

As already highlighted in figure 2, an impulsive signal Po is applied to the wave guide 4 and through magnetostrictive effect in correspondence with the position x, a magnetoacoustic wave is generated which propagates in both the directions of the guide 4 towards the end 20 and the opposite end 21.

The detector 40 detects a first main echo $e_{1s,k}$ which directly comes from the mobile magnet 30, after a delay $t_x$ from the excitation pulse k.

Subsequently, a first secondary echo $e_{1d,k}$ reaches the detector 40 with a delay equal to $t_Y$ with respect to the excitation pulse k. Such first secondary echo $e_{1d,k}$ is the magnetoacoustic wave generated by the position x which propagates in the wave guide 4 in correspondence with the free end 21 and which, after a reflection with unitary coefficient, reaches the detector 40, as indicated in figure 1 and figure 2.

By indicating with $t_L$ the time employed by an initial magnetoacoustic wave to go through the whole length L of the wave guide 4, the delay $t_Y$ is equal to $(2t_L - t_x)$. A second secondary echo $e_{2s,k}$ reaches the detector 40 after a delay equal to $2t_L + t_x$ and it is due to the first main echo $e_{1s,k}$ reflected at the end 20 and subsequently at the opposite end 21 of the wave guide 4.

Similarly, a third secondary echo $e_{2d,k}$ reaches the detector 40 after a delay equal to $4t_L + t_x$ and it is due to the first secondary echo $e_{1dk}$ reflected by the detector 40 and thus reflected at the end 20 and subsequently at the opposite end 21 of the wave guide 4.

It is evident how by considering the delays of the first main echo $e_{1s,k}$ and of the first three secondary echoes: $e_{1d,k}$, $e_{2s,k}$, $e_{2d,k}$, with respect to the sending time of the excitation pulse k, it is possible for the measuring device D by means of the microcontroller 1, to estimate the value $t_L$ under redundancy condition, in fact:

$$1a) \quad t_{e2s} - t_{e1s} = 2t_L$$

$$1b) \quad t_{e2d} - t_{e1d} = 2t_L$$

The two above indicated relations are always respected even if the detector 40 is not exactly placed at one end of the wave guide 4.

In fact, supposing that the detector 40 is at such a distance from the end 20 that it determines a variation $\alpha$ in the delays of the first main echo $e_{1s,k}$ and of the secondary echoes $e_{1d,k}$, $e_{2s,k}$, $e_{2d,k}$, i.e. that

$$t_{e1s} = t_x + \alpha,$$

$$t_{e1d} = 2t_L - t_x + \alpha,$$

$$t_{e2s} = 2t_L + t_x + \alpha,$$

$$t_{e2d} = 4t_L - t_x + \alpha$$

the relations 1a and 1b are still valid.

Moreover, the two estimations (1a) and (1b) of the value $t_L$ can be used as a check of one another.

The estimation of the variation $\alpha$ can be done by means of the following relations 1c), 1d) and 1e):

$$1c) \quad t_{e1s} + t_{e1d} = 2t_L + 2\alpha$$

$$1d) \quad t_{e2s} + t_{e1d} = 4t_L + 2\alpha$$

$$1e) \quad t_{e2s} + t_{e2d} = 6t_L + 2\alpha$$

Naturally, also in this case, the estimation of the variation $\alpha$ is carried out in redundancy ensuring a particular strength of the method.

The relations 1a, 1b, 1c, 1d, 1e, previously shown and grounded, can be advantageously applied to the measuring device D.

At the reset the initialisation step is started during which the gain of the amplifier 5 is placed at its maximum value, a single excitation pulse Po is sent and the times $t_{e1s}$, $t_{e1d}$, $t_{e2s}$, $t_{e2d}$ are measured. Thanks to the relations 1a and 1b the time $t_L$ is estimated whereas thanks to the relations 1c, 1d, 1f the time $\alpha$ is estimated.

The measuring device D enters the control step where the excitation pulses are supplied with period equal to $4t_L$. The constructive interference conditions Si are thus created and the gain of the amplifier 5 can be decreased.

During this step the relations 1a, 1b, 1c, 1d, 1e for the estimation of $t_L$ and $\alpha$ can be still applied and during the output the previously described signal $L_{PWM}$ which codes the value x/L in the duty cycle occurs.

The measuring step is activated by supplying the excitation pulses with period equal to $2t_L$ and thus placing itself in the maximum constructive interference conditions. The gain of the amplifier 5 can be further decreased and only the times $t_{e1s}$ and $t_{e1d}$ are measured.

Thanks to the relation 1c and to the knowledge of the value of $\alpha$ obtained during the initialisation or control step, it is possible to go on estimating the value of $t_L$ also during the measuring step.

Advantageously, the measuring device D thus allows a simple control for verifying and/or compensating a variation of the propagation speed of the magnetoacoustic wave caused by a thermal variation.

As it is well known, in fact, thermal variations lead to a modification of the propagation time $t_L$ of a wave in the wave guide 4. However, for each period of time equal to $2t_L$, i.e. for each excitation pulse Po, it is possible to verify the relation:

$$1c) \quad t_{e1s} + t_{e1d} = 2t_L + 2\alpha$$

also during the measuring step, i.e. when the excitation pulses are provided each $2t_L$, it is possible to follow slow variations in the time of $2t_L$.

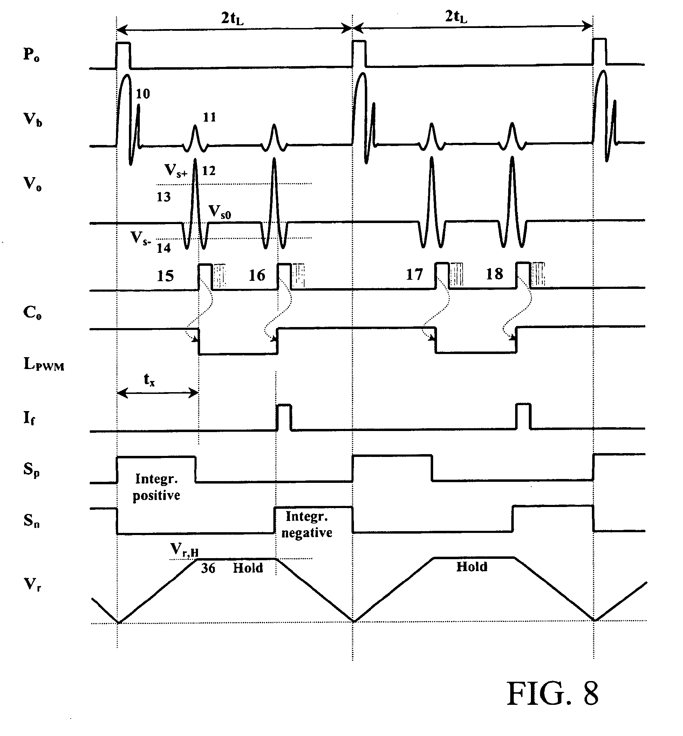

Now, with particular reference to the example of figure 7, an alternative structure is shown in the analogue form of the measuring device D, which will be indicated with D'. The time diagrams of figure 8 show the signals present in the scheme of figure 6.

Such measuring device D' always comprises a magnetostrictive sensor S with a magnetostrictive wave guide 4 of predetermined length L and at least one mobile magnetic cursor 30 slidingly guided along said wave guide 4.

The measuring device D' also comprises a pulse generator 25' associated with the wave guide 4 near an end 20 thereof, for supplying said magnetostrictive sensor S with current pulses Po and producing a magnetostrictive effect in correspondence with the mobile magnetic cursor 30.

Moreover, a magnetoacoustic wave detector 40 is placed near the end 20 of said guide 4 and it detects the magnetoacoustic waves and outputs an electric signal, for example a voltage Vb.

The measuring device D' also has a processing unit 55 which is input the output signal Vb of the detector 40 for outputting a Pulse Width Modulation $L_{PWM}$ signal which is used for determining the position x measure i.e. the travel of the mobile magnetic cursor 30.

Advantageously, according to the present invention, the pulse generator 25' generates pulses Po with period equal to $2t_L$, where $t_L$ is the time used by a magnetoacoustic wave to go through the length L of the wave guide 4.

The magnetoacoustic wave generated through magnetostrictive effect further to a pulse Po, starting from the position of the mobile magnetic cursor 30, propagates in the wave guide 4 in both directions towards the end 20 and towards the opposite end 21.

The output signal $V_b$ has a plurality of main pulses and echoes 11 generated by the magnetostrictive effect and some peaks or spurious echoes 10 mainly due to the excitation pulses Po introduced in the wave guide 4.

The amplification block 27 is commanded and controlled by a control unit 28 and it takes care of eliminating the spurious peaks 10 on $V_b$ insulating the sole main pulses and the echoes 11.

The amplification block 27 outputs a signal $V_o$ which comprises a plurality of peaks 12 which correspond to the pulses 11 amplified according to an amplification factor which is controlled by the block 28.

A comparison block 29, in cascade to the amplifier block 27, is input the signal Vo and it verifies the sequence overcoming of some voltage thresholds 13,14 by the peaks 12 of the signal $V_0$. In case of minimum realisation the thresholds required are $V_{s+}$ positive voltage and $V_{s0}$ i.e. reference voltage for the passage though zero. Possibly, for increasing the immunity to noise also a negative threshold $V_s$- is provided.

The comparison block 29 verifies of the going through sequence of the voltage thresholds is $V_{s-}$, $V_{s+}$, $V_{s0}$ and then it generates the impulsive signal Co.

The impulsive signal Co is sent to a flip flop 41 of the toggle type which outputs a signal $L_{PWM}$ of the Pulse Width Modulation type which defines the output for the measuring device D'.

Advantageously, the signal $L_{PWM}$ has a period equal to $2t_L$ and it has a duty cycle equal to $t_x/t_L$ where $t_x$ is the delay between the excitation pulse and the detection of the first main echo or pulse.

The impulsive pulse Co is also used as control signal for resetting a first flip flop Set-Reset 42 and also as input signal for a forming block 23, whose task is that of creating a signal If which generates a pulse starting from each rise edge of the signal $L_{PWM}$ for setting a second flip flop Set-Reset 22.

The first flip flop Set-Reset 42 outputs a signal $S_p$, whereas the second flip flop Set-Reset 22 outputs a signal $S_n$, both inputs of an integrator block 24.

Advantageously, according to the present embodiment with analogue structure, the measuring device D' comprises the integrator block 24 which is used for measuring the time $t_x$ and for maintaining it. The integrator block 24, which has at the output a voltage $V_r$, operates in three different modes according to the inputs:

| Modes | $S_p$ | $S_n$ | Action |
|---|---|---|---|
| 1 | 0 | 0 | Hold |
| 2 | 1 | 0 | Rising ramp |
| 3 | 0 | 1 | Falling ramp |
| 4 | 1 | 1 | $V_r$ = 0 V |

Once the slope M is expressed in V/s of the ramps produced by the integrator block 24 in the modes 2 and 3 defined and, it is identical except for the sign: positive in the mode 2, negative in the mode 3.

The mode 4, realised by delaying the reset of the flip flop 22 with respect to the set of the flip flop 42, is used for resetting the integrator.

The output Vr has a conformation with a positive ramp, a constant value and a negative ramp. In the diagram of figure 8 during the central part of constant value a tightness Vr,H value 36 is defined which is reached by

the output $V_r$ during a Hold step and it is directly proportional to the time $t_x$ with $V_{r,H} = M \cdot t_x$.

The output $V_r$ of the integrator 24 is input to a comparator 39 which outputs an impulsive signal P used for:

generating the pulse $P_o$;

resetting the integrator;

restoring the first and the second flip flop 42 and 22 and the flip flop of the toggle 41 type under known conditions; triggering the block 28 and the block 29.

An initialisation block 26 supervises the start of the system by zeroing the integrator when the overlapping effect of the echoes has not been stabilised yet.

The invention, in its different embodiments, solves the technical problem of the position measure in the absence of dampening elements and attains several advantages the first of which is surely given by the fact that the constructive interference of the secondary echoes with the main echo improves the relation signal/noise to the advantage of the measure precision.

Moreover, the measuring method of the invention is adaptive with respect to the length L of the wave guide.

Another advantage is given by the possibility of measuring the speed of the magnetoacoustic wave further to a thermal drift.

Finally it is to be noted that, in the digital realisation, it is possible to temporarily decrease the constructive interference entity to the advantage of a measuring redundancy of the parameters of interest.

**Claims**

1. Position measuring device with magnetostrictive technology comprising a magnetostrictive sensor (S) with:

a magnetostrictive wave guide (4);
at least one magnetic cursor (30) sliding along said wave guide (4);
a pulse generator (25, 25') associated with the wave guide (4), for supplying said magnetostrictive sensor (S) with current pulses (Po) and producing a magnetostrictive effect in correspondence with said magnetic cursor (30);
a magnetoacoustic wave detector (40) placed at one end (20) of said wave guide (4) for detecting echoes of said pulses (Po) and outputting a corresponding detection electric signal (Vb);
said pulse generator (25, 25') being driven for generating pulses with period equal to at least a multiple on basis 2 of time $t_L$, where time $t_L$ is the time used by a magnetoacoustic wave to go through said length (L) of said wave guide (4), so that the secondary echoes of a given excitation pulse (k) are in constructive interference with the main echo of an immediately successive excitation pulse (k+1), said pulse generator (25, 25') generating a first excitation pulse (k) which produces a magnetostrictive signal in correspondance with said mobile magnet (30), said magnetostrictive signal developing in both directions of said wave guide (4) with a first main echo ($e_{1s}$) and a first secondary echo ($e_{1d}$) which respectively propagate in the direction of said end (20) of said guide (4) and of an opposite end (21) producing in turn second and third secondary echoes ($e_{2s}$, $e_{2d}$) by reflection which are in constructive interference with the main echoes of the immediately successive excitation pulse (k+1), said detector (40) defining at least one pair of receipt times $t_{e1s}$, $t_{e2s}$ respectively of said first main echo $e_{1s}$ and of a secondary echo $e_{2s}$ generated by reflection in both the ends of $e_{1s}$ and/or at least one pair of receipt times $t_{e1d}$, $t_{e2d}$ respectively of a first secondary echo $e_{1d}$ and of an echo $e_{2d}$ generated by reflection,
said position measuring device (D) being arranged to calibrate said detector (40) allowing a compensation of a shift of said detector (40) from an origin end, said shift being defined in a end temporal value $\alpha$ and taken from calculation means according to any of the following relations:

$$1c) \quad t_{e1s} + t_{e1d} = 2t_L + 2\alpha$$

$$1d) \quad t_{e2s} + t_{e1d} = 4t_L + 2\alpha$$

$$1e) \quad t_{e2s} + t_{e2d} = 6t_L + 2\alpha$$

2. Device according to claim 1, **characterised in that** it is subject to automatically measuring the length (L) of the wave guide (4) according to a time distance between the excitation pulse and at least two between said main and secondary echoes, said time distance being the period of the current pulses generated by said pulse generator.

3. Device according to claim 2, **characterised in that** it is subject to automatically compensating speed variations of said generated magnetoacoustic wave caused by thermal variations on the basis of the measure of the time distance between said excitation pulses and said main and secondary echoes.

4. Device according to claim 1, **characterised in that** it comprises a digital or analogue processing unit (35, 55) receiving as input said output signal (Vb) of said detector (40) for outputting a Pulse Width Modulation ($L_{PWM}$) signal.

5. Device according to claim 4, **characterised in that** said Pulse Width Modulation ($L_{PWM}$) signal has a period equal to $2t_L$ and a duty cycle equal to $t_x/t_L$, where $t_x$ is the minimum delay with which said magnetoacoustic wave, generated in correspondence with said magnetic cursor (30), reaches said detector (40).

6. Device according to claim 1, **characterised in that** it is arranged to provide an initialisation step, a control step and a measuring step with estimation of said period $t_L$.

7. Device according to claim 1, **characterised in that** said wave guide (4) has a second end (21) opposite to said end (20) non tied or tied in such a way as to obtain positive reflection coefficient.

8. Device according to claim 1, **characterised in that** said wave guide (4) is devoid of dampening elements.

9. Position measuring method with magnetostrictive technology, comprising the steps of:

   providing a measuring device (D) with magnetostrictive sensor (S), said step of providing the measuring device (D) comprising the steps of:

   - providing a magnetostrictive wave guide (4);
   - providing at least one magnetic cursor (30) sliding along said wave guide (4);
   - providing a pulse generator (25, 25') associated with the wave guide (4), for providing said magnetostrictive sensor (S) with current pulses (Po) and producing a magnetostrictive effect in correspondence with said magnetic cursor (30);
   - providing a magnetoacoustic wave detector (40) placed at one end (20) of said wave guide (4) for detecting echoes of said pulses (Po) and outputting a corresponding detection electric signal (vb);

   - generating, by means of said pulse generator (25, 25') pulses with period equal to at least a multiple on basis 2 of time $t_L$, where time $t_L$ is the time used by a magnetoacoustic wave to go through said length (L) of said wave guide (4), so that the secondary echoes of a given excitation pulse (k) are in constructive interference with the main echoes of an immediately successive excitation pulse (k+1);
   - initialisating, wherein said initialisating step comprising the steps of:

      - generating, by means of said pulse generator (25, 25'), a first excitation pulse (k) which produces a magnetostrictive signal in correspondence with said mobile magnet (30),
      - by means of said magnetostrictive signal, developing in both directions of said wave guide (4) with a first main echo ($e_{1s}$) and a first secondary echo ($e_{1d}$) which respectively propagate in the direction of said end (20) of said guide (4) and of an opposite end (21) producing in turn second and third secondary echoes ($e_{2s}$, $e_{2d}$) by reflection which are in constructive interference with the main echoes of an immediately successive excitation pulse (k+1);

   - detecting, by means of said detector (40), at least one pair of receipt times $t_{e1s}$, $t_{e2s}$ respectively of said first main echo $e_{1s}$ and of a secondary echo $e_{2s}$ generated by reflection in both the ends of $e_{1s}$ and/or at least one pair of receipt times $t_{e1d}$, $t_{e2d}$ respectively of a first secondary echo $e_{1d}$ and of an echo $e_{2d}$ generated by reflection, and
   - calibrating, by means of calculation means, said detector (40) allowing a compensation of a shift of said detector (40) from an origin end, said shift being defined in a end temporal value a and taken from said calculation means according to any of the following relations:

$$1c) \quad t_{e1s} + t_{e1d} = 2t_L + 2\alpha$$

$$1d) \quad t_{e2s} + t_{e1d} = 4t_L + 2\alpha$$

$$1e) \quad t_{e2s} + t_{e2d} = 6t_L + 2\alpha$$

10. Method according to claim 9, **characterised in that** it comprises providing the length (L) of the wave guide (4) measured on the basis of a time distance between the main and secondary echoes, said time distance being the period of the current pulses generated by said pulse generator.

11. Method according to claim 9, **characterised in that** it comprises providing the use of a digital or analogue processing unit (35, 55) being input said output signal (Vb) of said detector (40) for outputting a Pulse Width Modulation ($L_{PWM}$) signal.

**12.** Method according to claim 9, **characterised in that** it provides an initialization step wherein said pulse generator (25, 25') produces a pulse for a correct detection of said receipt times $t_{e1s}$, $t_{e2s}$, $t_{e1d}$, $t_{e2d}$, obtaining the time $t_L$ by means of at least one between the two relations:

$$1a) \quad t_{e2s} - t_{e1s} = 2t_L$$

$$1b) \quad t_{e2d} - t_{e1d} = 2t_L$$

**13.** Method according to claim 9, **characterised in that** it provides a control step for a correct detection of said receipt times $t_{e1s}$, $t_{e2s}$, $t_{e1d}$, $t_{e2d}$, wherein said pulse generator (25, 25') produces pulses with period equal to $4t_L$.

**14.** Method according to claim 13, **characterised in that** it can automatically compensate speed variations of said magnetoacoustic wave caused by thermal variations on the basis of the repetitive measure for each excitation pulse (Po) of the time distance between said excitation pulse and said main and secondary echoes.

**Patentansprüche**

**1.** Positionsmessvorrichtung mit Magnetostriktionstechnologie umfassend einen Magnetostriktionssensor (S) mit:

einem Magnetostriktionswellenleiter (4);
mindestens einem magnetischen Läufer (30), welcher entlang des Wellenleiters (4) gleitet;
einem Pulsgenerator (25, 25'), welcher dem Wellenleiter (4) zum Zuführen von Strompulsen (Po) zu dem Magnetostriktionssensor (S) und zum Produzieren eines Magnetostriktionseffekts in Übereinstimmung mit dem magnetischen Läufer (30) zugeordnet ist;
einem Detektor für magnetoakustische Wellen (40), welcher an einem Ende (20) des Wellenleiters (4) zum detektieren von Echos des Pulses (Po) und zur Ausgabe eines entsprechenden Detektionselektrosignals (Vb) platziert ist;
wobei der Pulsgenerator (25, 25') zur Erzeugung von Pulsen mit einer Periode gleich mindestens einem Mehrfachen auf Basis von 2 einer Zeit $t_L$ angesteuert wird, wobei eine Zeit $t_L$ die Zeit ist, welche eine magnetoakustischen Welle benötigt, um durch die Länge (L) des Wellenleiters (4) hindurchzugehen, sodass die Sekundärechos eines gegebenen Anregungspulses (k) eine konstruktive Interferenz mit dem Hauptecho eines direkt folgenden Anregungspulses (k +1) ausbilden, wobei der Pulsgenerator (25, 25') einen ersten Anregungspuls (k) erzeugt, welcher ein Magnetostriktionssignal in Übereinstimmung mit dem mobilen Magneten (30) produziert, wobei das Magnetostriktionssignal sich in beiden Richtungen des Wellenleiters (4) mit einem ersten Hauptecho ($e_{1s}$) und einem zweiten Sekundärecho ($e_{1d}$) entwickelt, welche jeweils in der Richtung des Endes (20) des Leiters (4) und eines gegenüberliegenden Endes (21) propagieren, wiederum zweite und dritte Sekundärechos ($e_{2s}$, $e_{2d}$) durch Reflexion produzierend, welche eine konstruktive Interferenz mit den Hauptechos des direkt folgenden Anregungspulses (k +1) ausbilden, wobei der Detektor (40) mindestens ein Paar von Empfangszeiten $t_{e1s}$, $t_{e2s}$ jeweils von dem ersten Hauptecho $e_{1s}$ und von einem Sekundärecho $e_{2s}$ definiert, erzeugt durch Reflexion in beiden der Enden von $e_{1s}$, und/oder mindestens ein Paar von Empfangsseiten $t_{e1d}$, $t_{e2d}$, jeweils von einem ersten Sekundärecho $e_{1d}$ und von einem Echo $e_{2d}$, erzeugt durch Reflexion, definiert wobei die Positionsmessvorrichtung (D) dafür eingerichtet ist, den Detektor (40) zu kalibrieren, eine Kompensation einer Verschiebung des Detektors (40) von einem Ursprungsende erlaubend, wobei die Verschiebung in einem Endtemporalwert $\alpha$ definiert ist und entnommen ist von Kalkulationsmitteln gemäß einer der folgenden Beziehungen:

$$1c) \quad t_{e1s} + t_{e1d} = 2t_L + 2\alpha$$

$$1d) \quad t_{e2s} + t_{e1d} = 4t_L + 2\alpha$$

$$1e) \quad t_{e2s} + t_{e2d} = 6t_L + 2\alpha$$

**2.** Vorrichtung nach Anspruch 1, **dadurch gekennzeichnet, dass** sie unterworfen ist einer automatischen Messung der Länge (L) des Wellenleiters (4) gemäß einem Zeitabstand zwischen dem Anregungspuls und mindestens zwei zwischen den Haupt- und Sekundärechos, wobei der Zeitabstand die Periode der Strompulse ist, welche durch den Pulsgenerator erzeugt werden.

**3.** Vorrichtung nach Anspruch 2, **dadurch gekennzeichnet, dass** sie unterworfen ist einer automatischen Kompensation von Geschwindigkeitsvariationen von der erzeugten magnetoakustische Welle, welche durch thermische Variationen verursacht sind, auf der Basis der Messung des Zeitabstands zwischen den Anregungspulsen und den Haupt- und Sekundärechos,.

4. Vorrichtung nach Anspruch 1, **dadurch gekennzeichnet dass** sie eine Digital- oder Analogverarbeitungseinheit (35, 55) umfasst, welche als Eingabe das Ausgabesignal (Vb) des Detektors (40) zur Ausgabe eines Pulsbreitenmodulation ($L_{PWM}$) -Signals empfängt.

5. Vorrichtung nach Anspruch 4, **dadurch gekennzeichnet, dass** das Pulsbreitenmodulation ($L_{PWM}$) -Signal eine Periode, welche gleich zu $2t_L$ ist, und einen Arbeitszyklus aufweist, welcher gleich zu $t_x/t_L$ ist, wobei $t_x$ die Minimalverzögerung ist, mit welcher die magnetoakustische Welle, welche in Übereinstimmung mit dem magnetischen Läufer (30) erzeugt ist, den Detektor (40) erreicht.

6. Vorrichtung nach Anspruch 1, **dadurch gekennzeichnet, dass** sie eingerichtet ist, um einen Initialisierungsschritt, einen Regelungs-/Steuerungsschritt und einen Messschritt mit einer Abschätzung der Periode $t_L$ bereitzustellen.

7. Vorrichtung nach Anspruch 1, **dadurch gekennzeichnet, dass** der Wellenleiter (4) ein festgemachtes oder nicht festgemachtes zweites Ende (21) aufweist, gegenüberliegend dem Ende (20), sodass ein positiver Reflexionskoeffizient erhalten wird.

8. Vorrichtung nach Anspruch 1, **dadurch gekennzeichnet dass** der Wellenleiter (4) frei von Dämpfungselementen ist.

9. Positionsmessverfahren mit Magnetostriktionstechnologie umfassend die Schritte:

Bereitstellen einer Messvorrichtung (D) mit einem Magnetostriktionssensor (S), wobei der Schritt eines Bereitstellens der Messvorrichtung (D) die Schritte umfasst:

- Bereitstellen eines Magnetostriktionswellenleiters (4);
- Bereitstellen mindestens eines magnetischen Läufers (30), welche entlang des Wellenleiters (4) geleitet;
- Bereitstellen eines Pulsgenerators (25, 25'), welcher dem Wellenleiter (4) zugeordnet ist zum Zuführen von Strompulsen (Po) zu dem Magnetostriktionssensor (S) und zum Produzieren eines Magnetostriktionseffekts in Übereinstimmung mit dem magnetischen Läufer (30);
- Bereitstellen eines Detektors für magnetoakustische Wellen (40), welcher an einem Ende (20) des Wellenleiters (4) zum Detektieren von Echos von Pulsen (Po) und zur Ausgabe eines entsprechenden Detektionselektrosignals (Vb) platziert ist;

Erzeugen, mittels des Pulsgenerators (25, 25') von Pulsen mit einer Periode gleich mindestens einem Mehrfachen auf Basis von 2 einer Zeit $t_L$, wobei eine Zeit $t_L$ die Zeit ist, welche eine magnetoakustische Welle benötigt, um durch die Länge (L) des Wellenleiters (4) hindurchzugehen, sodass die Sekundärechos eines gegebenen Anregungspulses (K) eine konstruktive Interferenz mit den Hauptechos eines direkt folgenden Anregungspulses (k +1) ausbilden;

- Initialisierung, wobei der Initialisierungsschritt die Schritte umfasst:
- Erzeugen mittels des Pulsgenerators (25, 25') eines ersten Anregungspulses (k), welcher ein Magnetostriktionssignal in Übereinstimmung mit dem mobilen Magneten (30) produziert,

mittels des Magnetostriktionssignals, Entwickeln in beiden Richtungen des Wellenleiters (4) mit einem ersten Hauptecho ($e_{1s}$) und einem ersten Sekundärecho ($e_{1d}$), welche jeweils in die Richtung des Endes (20) des Leiters (4) und eines gegenüberliegenden Endes (21) propagieren, wiederum zweite und dritte Sekundärechos ($e_{2s}$, $e_{2d}$) durch Reflexion erzeugend, welche eine konstruktive Interferenz mit den Hauptechos eines direkt folgenden Anregungspulses (k + 1) ausbilden;

- Detektieren mittels des Detektors (40) mindestens eines Paares von Empfangszeiten $t_{e1s}$, $t_{e2s}$ jeweils von dem ersten Hauptecho $e_{1s}$ und von einem zweiten Echo $e_{2s}$, erzeugt durch Reflexion in beiden der Enden von $e_{1s}$ und/oder mindestens eines Paares von Empfangszeiten $t_{e1d}$, $t_{e2d}$ jeweils von einem ersten Sekundärecho $e_{1d}$ und von einem Echo $e_{2d}$, erzeugt durch Reflektion, und
- Kalibrieren, mittels Kalkulationsmitteln, des Detektors (40), eine Kompensation einer Verschiebung des Detektors (40) von einem Ursprungsende erlaubend, wobei die Verschiebung definiert ist in einem Endtemporalwert $\alpha$ und entnommen ist den Kalkulationsmitteln gemäß einer aus den folgenden Beziehungen:

$$1c) \quad t_{e1s} + t_{e1d} = 2t_L + 2\alpha$$

$$1d) \; t_{e2s} + t_{e1d} = 4t_L + 2\alpha$$

$$1e) \; t_{e2s} + t_{e2d} = 6t_L + 2\alpha$$

**10.** Verfahren nach Anspruch 9, **dadurch gekennzeichnet dass** es umfasst:

Bereitstellen der Länge (L) des Wellenleiters (4), gemessen auf der Basis eines Zeitabstands zwischen den Haupt- und Sekundärechos, wobei der Zeitabstand die Periode der Strompulse ist, welche durch den Pulsgenerator erzeugt werden.

**11.** Verfahren nach Anspruch 9, **dadurch gekennzeichnet, dass** es umfasst:

Bereitstellen der Verwendung einer Digital- oder Analogverarbeitungseinheit (35, 55), welcher das Ausgabesignal (Vb) des Detektors (40) zur Ausgabe eines Pulsbreitenmodulation ($L_{PWM}$) - Signals eingegeben wird.

**12.** Verfahren nach Anspruch 9, **dadurch gekennzeichnet, dass** es einen Initialisierungsschritt bereitstellt, wobei der Pulsgenerator (25, 25') einen Puls für eine korrekte Detektion der Empfangszeiten $t_{e1s}$, $t_{e2s}$, $t_{e1d}$, $t_{e2d}$ produziert, wobei die Zeit $t_L$ mittels mindestens einer aus den zwei Beziehungen:

$$1a) \; t_{e2s} - t_{e1s} = 2t_L$$

$$1b) \; t_{e2d} - t_{e1d} = 2t_L$$

erhalten wird.

**13.** Verfahren nach Anspruch 9, **dadurch gekennzeichnet, dass** es ein Steuerungs-/Regelungsschritt für eine korrekte Detektion der Empfangszeiten $t_{e1s}$, $t_{e2s}$, $t_{e1d}$, $t_{e2d}$ bereitstellt, wobei der Pulsgenerator (25, 25') Pulse mit einer Periode gleich $4t_L$ produziert.

**14.** Verfahren nach Anspruch 13, **dadurch gekennzeichnet, dass** es automatisch Geschwindigkeitsvariationen der magnetakustischen Welle kompensieren kann, verursacht durch thermische Variationen, auf der Basis der jeweiligen Messung, für jeden Anregungspuls (Po), der Zeitdifferenz zwischen dem Anregungspuls und den Haupt- und Sekundärechos.

**Revendications**

**1.** Dispositif de mesure de position avec une technologie magnétostrictive comprenant un capteur magnétostrictif (S) avec :

un guide d'ondes magnétostrictif (4) ;
au moins un curseur magnétique (30) coulissant le long dudit guide d'ondes (4) ;
un générateur d'impulsions (25, 25') associé au guide d'ondes (4), pour fournir au dit capteur magnétostrictif (S) des impulsions de courant (Po) et pour produire un effet magnétostrictif en correspondance avec ledit curseur magnétique (30) ;
un détecteur d'ondes magnéto-acoustiques (40) placé à une extrémité (2b) dudit guide d'ondes (4) pour détecter des échos desdites impulsions (Po) et délivrer en sortie un signal électrique de détection correspondant (Vb) ;
ledit générateur d'impulsions (25, 25') étant piloté pour générer des impulsions avec une période égale au moins à un multiple sur la base 2 du temps $t_L$, où le temps $t_L$ est le temps mis par une onde magnéto-acoustique pour parcourir ladite longueur (L) dudit guide d'ondes (4) de sorte que les échos secondaires d'une impulsion d'excitation donnée (k) soient en interférence constructive avec l'écho principal d'une impulsion d'excitation immédiatement successive (k+1), ledit générateur d'impulsions (25, 25') générant une première impulsion d'excitation (k) qui produit un signal magnétostrictif en correspondance avec ledit aimant mobile (30), ledit signal magnétostrictif se développant dans deux directions dudit guide d'ondes (4) avec un premier écho principal ($e_{1s}$) et avec un premier écho secondaire ($e_{1d}$) qui se propagent respectivement dans la direction de ladite extrémité (20) dudit guide (4) et d'une extrémité opposée (21) produisant à leur tour par réflexion des deuxième et troisième échos secondaires ($e_{2s}$, $e_{2d}$) qui sont en interférence constructive avec les échos principaux de l'impulsion d'excitation immédiatement successive (k+1), ledit détecteur (40) définissant au moins une paire de temps de réception $t_{e1s}$, $t_{e2s}$ respectivement dudit premier écho principal $e_{1s}$ et d'un écho secondaire $e_{2s}$ généré par réflexion dans les deux extrémités de $e_{1s}$ et/ou au moins une paire de temps de réception $t_{e1d}$, $t_{e2d}$ respectivement d'un premier écho secondaire $e_{1d}$ et d'un écho $e_{2d}$ généré par réflexion,
ledit dispositif de mesure de position (D) étant agencé pour étalonner ledit détecteur (40) afin de permettre une compensation d'un décalage dudit détecteur (40) depuis une extrémité d'origine, ledit décalage étant défini dans une valeur temporelle finale α et extrait de moyens de calcul selon l'une quelconque des relations suivantes :

$$1c)\ t_{e1s} + t_{e1d} = 2t_L + 2\alpha$$

$$1d)\ t_{e2s} + t_{e1d} = 4t_L + 2\alpha$$

$$1e)\ t_{e2s} + t_{e2}d = 6t_L + 2\alpha$$

**2.** Dispositif selon la revendication 1, **caractérisé en ce qu'**il est destiné à mesurer automatiquement la longueur (L) du guide d'ondes (4) selon une distance temporelle entre l'impulsion d'excitation et au moins deux échos parmi lesdits échos principaux et secondaires, ladite distance temporelle étant la période des impulsions courantes générées par ledit générateur d'impulsions.

**3.** Dispositif selon la revendication 2, **caractérisé en ce qu'**il est destiné à compenser automatiquement des variations de vitesses de ladite onde magnéto-acoustique générée, causées par des variations thermiques sur la base de la mesure de la distance temporelle entre lesdites impulsions d'excitation et lesdits échos principaux et secondaires.

**4.** Dispositif selon la revendication 1, **caractérisé en ce qu'**il comprend une unité de traitement numérique ou analogique (35, 55) recevant en entrée ledit signal de sortie (Vb) dudit détecteur (40) afin de délivrer en sortie un signal de modulation d'impulsions en largeur ($L_{PWM}$).

**5.** Dispositif selon la revendication 4, **caractérisé en ce que** ledit signal de modulation d'impulsions en largeur ($L_{PWM}$) a une période égale à $2t_L$ et un coefficient d'utilisation égal à $t_x/t_L$, où $t_x$ est le retard minimal avec lequel ladite onde magnéto-acoustique, générée en correspondance avec ledit curseur magnétique (30), atteint ledit détecteur (40).

**6.** Dispositif selon la revendication 1, **caractérisé en ce qu'**il est agencé pour fournir une étape d'initialisation, une étape de commande et une étape de mesure avec estimation de ladite période $t_L$.

**7.** Dispositif selon la revendication 1, **caractérisé en ce que** ledit guide d'ondes (4) a une seconde extrémité (21) opposée à ladite extrémité (20) non liée ou liée de manière à obtenir un coefficient de réflexion positif.

**8.** Dispositif selon la revendication 1, **caractérisé en ce que** ledit guide d'ondes (4) est exempt d'éléments d'atténuation.

**9.** Procédé de mesure de position avec une technologie magnétostrictive, comprenant les étapes suivantes :

- l'utilisation d'un dispositif de mesure (D) avec un capteur magnétostrictif (S), ladite étape d'utilisation du dispositif de mesure (D) comprenant les étapes suivantes :

- l'utilisation d'un guide d'ondes magnétostrictif (4) ;
- l'utilisation d'au moins un curseur magnétique (30) coulissant le long dudit guide d'ondes (4) ;
- l'utilisation d'un générateur d'impulsions (25, 25'), associé au guide d'ondes (4), pour fournir au dit capteur magnétostrictif (S) des impulsions de courrant (Po) et pour produire un effet magnétostrictif en correspondance avec ledit curseur magnétique (30) ;
- l'utilisation d'un détecteur d'ondes magnétoacoustique (40) placé à une extrémité (20) dudit guide d'ondes (4) pour détecter des échos desdites impulsions (Po) et pour délivrer en sortie un signal électrique de détection correspondant (Vb) ;

- la génération, au moyen dudit générateur d'impulsions (25, 25'), d'impulsions avec une période égale au moins à un multiple sur la base 2 du temps $t_L$, où le temps $t_L$ est le temps mis par une onde magnéto-acoustique pour parcourir ladite longueur (L) dudit guide d'ondes (4) de sorte que les échos secondaires d'une impulsion d'excitation donnée (k) sont en interférence constructive avec les échos principaux d'une impulsion d'excitation immédiatement successive (k+1) ;
- l'initialisation, dans laquelle ladite étape d'initialisation comprend les étapes suivantes :

- la génération, au moyen dudit générateur d'impulsions (25, 25'), d'une première impulsion d'excitation (k) qui produit un signal magnétostrictif en correspondance avec ledit aimant mobile (30),
- au moyen dudit signal magnétostrictif, le développement dans deux directions dudit guide d'ondes (4) avec un premier écho principal ($e_{1s}$) et avec un premier écho secondaire ($e_{1d}$) qui se propagent respectivement dans la direction de ladite extrémité (20) dudit guide (4) et d'une extrémité opposée (21) produisant à leur tour des second et troisième échos secondaires ($e_{2s}$, $e_{2d}$) par réflexion qui sont en interférence constructive avec les échos principaux d'une impulsion d'excitation immédiatement successive (k+1) ;

- la détection, au moyen dudit détecteur (40), d'au moins une paire de temps de réception $t_{e1s}$, $t_{e2s}$ respectivement dudit premier écho principal $e_{1s}$ et d'un écho secondaire $e_{2s}$ généré par réflexion dans les deux extrémités de $e_{1s}$ et/ou d'au moins une paire de temps de réception $t_{e1d}$, $t_{e2d}$ respectivement d'un premier écho secondaire $e_{1d}$ et d'un écho $e_{2d}$ généré par réflexion, et

- l'étalonnage, au moyen de moyens de calcul, dudit détecteur (40) afin de permettre une compensation d'un décalage dudit détecteur (40) d'une extrémité d'origine, ledit décalage étant défini dans une valeur temporelle finale $\alpha$ et extrait desdits moyens de calcul selon l'une quelconque des relations suivantes :

$$1c) \; t_{e1s} + t_{e1d} = 2t_L + 2\alpha$$

$$1d) \; t_{e2s} + t_{e1d} = 4t_L + 2\alpha$$

$$1e) \; t_{e2s} + t_{e2d} = 6t_L + 2\alpha$$

**10.** Procédé selon la revendication 9, **caractérisé en ce qu'**il comprend la fourniture de la longueur (L) du guide d'ondes (4) mesurée sur la base d'une distance temporelle entre les échos principaux et secondaires, ladite distance temporelle étant la période des impulsions courantes générées par ledit générateur d'impulsions.

**11.** Procédé selon la revendication 9, **caractérisé en ce qu'**il comprend la fourniture de l'utilisation d'une unité de traitement numérique ou analogique (35, 55) recevant en entrée ledit signal de sortie (Vb) dudit détecteur (40) afin de délivrer en sortie un signal de modulation d'impulsions en largeur ($L_{PWM}$).

**12.** Procédé selon la revendication 9, **caractérisé en ce qu'**il fournit une étape d'initialisation dans laquelle ledit générateur d'impulsions (25, 25') produit une impulsion pour une détection correcte desdits temps de réception $t_{e1s}$, $t_{e2s}$, $t_{e1d}$, $t_{e2d}$, obtenant le temps $t_L$ au moyen d'au moins une relation parmi les deux relations suivantes :

$$1a) \; t_{e2s} - t_{e1s} = 2t_L$$

$$1b) \; t_{e2d} - t_{e1d} = 2t_L$$

**13.** Procédé selon la revendication 9, **caractérisé en ce qu'**il fournit une étape de commande pour une détection correcte desdits temps de réception $t_{e1s}$, $t_{e2s}$, $t_{e1d}$, $t_{e2d}$, dans laquelle ledit générateur d'impulsions (25, 25') produit des impulsions avec une période égale à $4t_L$.

**14.** Procédé selon la revendication 13, **caractérisé en ce qu'**il peut compenser automatiquement des variations de vitesses de ladite onde magnéto-acoustique causées par des variations thermiques sur la base de la mesure répétitive pour chaque impulsion d'excitation (Po) de la distance temporelle entre ladite impulsion d'excitation et lesdits échos principaux et secondaires.

FIG. 1

FIG. 2

FIG. 3

FIG. 4

FIG. 5

FIG. 6

FIG.7

FIG. 8

**EP 1 691 173 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5017867 A
- US 5583433 A